# FASCICULE DE BREVET EUROPEEN

(11) **EP 1 429 606 B1**
(45) Date de publication et mention de la délivrance du brevet: **28.04.2010**
(21) Numéro de dépôt: 02762503.7
(22) Date de dépôt: 28.06.2002
(51) Int. Cl.: A01N 37/40

(54) **UTILISATION EN PHYTOPROTECTION D'ESTERS D'ACIDE SALICYLIQUE ET DE LEURS ASSOCIATIONS AVEC DES ELICITINES.**
VERWENDUNG VON ESTERN DER SALIZYLSÄURE UND IHREN KOMBINATIONEN MIT ELICITINEN IMPFLANZENSCHUTZ
USE OF SALICYLIC ACID ESTERS AND ASSOCIATIONS THEREOF WITH ELICITINS IN THE PROTECTION OF PLANTS

(30) Priorité: 29.06.2001 FR 0108611
(43) Date de publication de la demande: 23.06.2004
(73) Titulaire: INSTITUT NATIONAL DE LA RECHERCHE AGRONOMIQUE (INRA), 75007 Paris Cedex 07 (FR); De Mil, Christophe, 75014 Paris (FR)
(72) Inventeur: DE MIL, Christophe, F-75014 Paris (FR); BLEIN, Jean-Pierre, F-21490 Varois-chaignot (FR); SUTY, Lydie, F-21000 Dijon (FR)
(74) Mandataire: Vialle-Presles, Marie José
(86) Numéro de dépôt international: PCT/FR2002/002246
(87) Numéro de publication internationale: WO 2003/001912

(56) Documents cités:
- WO-A-01/22822
- WO-A-99/25191
- FR-A- 2 802 772
- DATABASE BIOSIS [en ligne] BIOSCIENCES INFORMATION SERVICE, PHILADELPHIA, PA, US; 1996 KELLER HARALD ET AL: "Salicylic acid mediates elicitin-induced systemic acquired resistance, but not necrosis in tobacco." Database accession no. PREV199699265007 XP002194564 & MOLECULAR PLANT-MICROBE INTERACTIONS, vol. 9, no. 8, 1996, pages 696-703, ISSN: 0894-0282
- KLESSIG D F ET AL: "THE SALICYCLIC ACID SIGNAL IN PLANTS" PLANT MOLECULAR BIOLOGY, NIJHOFF PUBLISHERS, DORDRECHT, NL, vol. 26, 1994, pages 1439-1458, XP002923571 ISSN: 0167-4412
- PONCHET M ET AL: "Are elicitins cryptograms in plant-Oomycete communications?" CMLS CELLULAR AND MOLECULAR LIFE SCIENCES, vol. 56, no. 11-12, décembre 1999 (1999-12), pages 1020-1047, XP002194562 ISSN: 1420-682X
- HUNG DANIEL Y ET AL: "Synthesis, identification, characterization, stability, solubility and protein binding of ester derivatives of salicylic acid and diflunisal." INTERNATIONAL JOURNAL OF PHARMACEUTICS (AMSTERDAM), vol. 153, no. 1, 1997, pages 25-39, XP002194563 ISSN: 0378-5173

## Description

L'invention concerne la protection des végétaux vis à vis d'agents phytopathogènes.

Depuis plusieurs années déjà, on cherche à améliorer les méthodes de lutte contre les maladies des plantes, en limitant au maximum l'utilisation de produits polluants.

Les principales approches envisagées comprennent la sélection de plantes résistantes aux agents pathogènes, et l'induction des mécanismes naturels de défense des plantes et, en particulier, la résistance systémique acquise (RSA).

La résistance systémique acquise est un mécanisme de défense activé lors de l'infection par certains organismes phytopathogènes, et qui confère une protection durable de la plante non seulement vis-à-vis du pathogène inducteur, mais également vis-à-vis d'autres pathogènes, notamment des microorganismes ou des virus.

La RSA résulte d'une cascade complexe de réactions, en réponse à un signal initial (dénommé " éliciteur "), qui est généralement une molécule produite par un organisme pathogène. Parmi les éliciteurs les mieux caractérisés, on citera les élicitines [cf. revue par P. RICCI, " Induction of the Hypersensitive Response and Systemic Acquired Resistance by Fungal Proteins : the Case of Elicitins ", parue dans Plant-Microbes Interactions, Volume 3, édité par G. STACEY et N.T. KEEN, (éditions CHAPMAN et HALL) pp. 53-75, (1997)].

Ces protéines, produites par différentes espèces de champignons phytopathogènes des genres *Phytophthora* et *Pythium,* déclenchent chez les plantes réactives une cascade de signalisation, se manifestant dans un premier temps par l'apparition rapide d'une réponse de type " hypersensible " (RH) qui entraîne localement ou à distance, la formation de lésions nécrotiques associée à la mise en place d'une RSA à large spectre. Bien que les processus, et notamment les signaux cellulaires, impliqués dans l'induction de la RSA ne soient pas complètement connus, il apparaît toutefois que l'acide salicylique joue un rôle important dans ce mécanisme d'induction cf. par exemple MALAMY et KLESSIG, Plant J., 2 : 643-654, (1992).

Afin de renforcer les défenses naturelles des plantes contre des agents pathogènes, on a cherché à reproduire artificiellement la RSA notamment en recherchant des éliciteurs de synthèse qui pourraient reproduire les effets de molécules naturelles telles que les élicitines. L'utilisation de l'acide salicylique a ainsi été proposée ; toutefois, bien que l'on observe l'induction d'une RSA, on n'obtient en pratique qu'une faible protection.

Quelques molécules de synthèse ont été décrites comme de meilleurs inducteurs de RSA que l'acide salicylique. il s'agit de dérivés de l'acide nicotinique, et notamment l'acide 2,6-dichloroisonicotinique [KLAUSS et al., Plant J., 2 : 655-660, (1992)] ou de dérivés de l'acide benzoïque et notamment le benzo (1, 2, 3) thiadiazole-carbothioic acid S-methylester [GORLACH et al., Plant Cell, 8 : 629-643, (1996)]. Des acides gras aminés, en particulier l'acide-aminobutyrique, ont aussi été décrits comme pouvant améliorer la résistance aux maladies [COHEN et al., Plant Physiol., 104 : 59-66, (1994)].

La présente invention propose de nouveaux inducteurs de résistance systémique acquise, utilisables en phytoprotection.

Les Inventeurs ont en effet constaté que certains dérivés d'acide salicylique permettaient d'induire chez les plantes une résistance systémique acquise conférant une protection vis-à-vis des pathogènes supérieure à celle conférée par l'acide salicylique.

La présente invention a pour objet l'utilisation d'un dérivé d'acide salicylique choisi parmi des composés de formule générale (I) 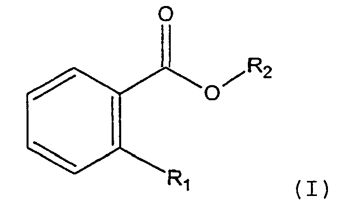 dans laquelle :
R₁ est un groupe 2-oxy ester de formule -O-CO-R₃ dans laquelle R₃ est une chaîne aliphatique ou alicyclique en C₃ à C₉, et R₂ est un atome d'hydrogène, ou bien,
pour la protection des plantes contre des agents pathogènes, par induction chez lesdites plantes d'une résistance systémique acquise.

Ces composés pourront également avantageusement être utilisés sous la forme de leurs sels avec une base, organique ou minérale. Des sels particulièrement préférés sot les sels d'acides aminés basiques, notamment de lysine.

Des composés particulièrement préférés sont des esters d'un acide carboxylique à nombre pair d'atomes de carbone, et d'acide salicylique, parmi lesquels on citera notamment: l'acide octanoate-2-salicylique, l'acide hexanoate-2-salicylique, l'acide butyrate-2-salicylique, ainsi que leurs sels.

Pour la mise en oeuvre de la présente invention, les composés de formule (I) seront généralement utilisés à raison de 0,02 à 10 nmoles, avantageusement de 0,1 à 1 nmole, de composé par plante traitée.

Par exemple, on pourra utiliser des préparations dudit composé à des concentrations de 5 µM à 1 mM, avantageusement de 10 µM à 500 µM.

Les quantités mentionnées ci-dessus sont données à titre indicatif ; elles pourront être augmentées ou diminuées en fonction notamment de l'âge, de la nature ou des dimensions des plantes traitées, ainsi que la méthode d'application utilisée. Par exemple, pour protéger de jeunes plantes, il sera possible d'abaisser la concentration à 500 nM.

Les concentrations indiquées ci-dessus peuvent être obtenues en émulsion ou dispersion aqueuse, notamment dans le cas des dérivés comprenant une chaîne R₂ ou R₃ comportant au plus 8 atomes de carbones. Pour les dérivés comportant une chaîne R₂ ou R₃ de taille supérieure, on pourra utiliser comme solvants l'éthanol, le diméthylformamide ou le diméthylsulfoxyde, et ajouter la solution à un grand volume d'eau.

En outre, les Inventeurs ont constaté que de façon surprenante, lorsqu'on associait un composé de formule générale (I) avec une élicitine, on observe une potentialisation des effets biologiques de chacun des deux constituants, qui permet d'obtenir une protection efficace pour des doses qui sont 10 à 100 fois plus faibles que celles nécessaires lorsque chacun des 2 constituants est utilisé isolément.

La pésente invention a également pour objet l'utilisation d'un composé de formule générale (I) : 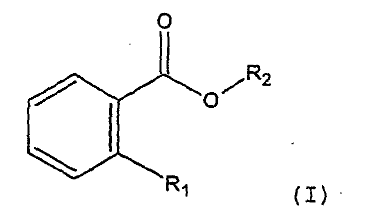 dans laquelle :
a) R₁ est un groupe hydroxyle et R₂ est une chaîne aliphatique ou alicyclique en C₂ à C₂₂ ; ou bien
b) R₁ est un groupe 2-oxy ester de formule -O-CO-R₃ dans laquelle R₃ est une chaîne aliphatique ou alicyclique en C₁ à C₂₁, et R₂ est un atome d'hydrogène; ou bien
c) R₁ est un groupe 2-oxy ester de formule -O-CO-R₃ où R₃ est défini comme ci-dessus, et R₂ est une chaîne aliphatique ou alicyclique en C₂ à C₂₂,
associé à une élicitine pour la protection de végétaux contre des pathogènes.

Dans ce cadre, il est possible d'administrer séparément le composé de formule générale (I) et l'élicitine, par exemple en administrant l'un et l'autre successivement, ou à deux endroits différents de la plante. Il sera toutefois généralement plus commode de les administrer en mélange.

La présente invention propose en conséquence de nouvelles compositions utilisables pour la protection des plantes contre des pathogènes. Ces compositions comprennent un mélange d'une élicitine avec un composé répondant à la formule générale (I) tel que défini ci-dessus.

Les composés a) comme les composés b) et c) sont connues en eux-mêmes et disponibles dans le commerce. Ils peuvent également être obtenus facilement par des méthodes classiques de synthèse organique, par exemple, dans le cas des composés a), par estérification d'un alcool aliphatique ou alicyclique par un dérivé de l'acide salicylique, dans le cas des composés b) par estérification de la fonction hydroxyle de l'acide salicylique par un dérivé d'un acide carboxylique, et dans le cas des composés c) estérification des composés b) par un alcool à chaîne aliphatique ou alicyclique.

Des compositions conformes à l'invention peuvent par exemple être obtenues par simple mélange d'une élicitine en solution aqueuse avec une émulsion ou dispersion d'un composé de formule générale (I). Dans ces conditions, un complexe associant une molécule d'élicitine, avec une molécule du composé de formule générale (I) peut se former.

Selon un mode de réalisation préféré de la présente invention, ladite élicitine et ledit composé sont associés dans un rapport molaire de 1:1 à 1 :0,5.

Généralement, on administrera de 0,005 à 1 nmole, de préférence de 0,05 à 0,5 nmole d'élicitine et de composé de formule générale (I) ou de leur mélange par plante traitée.

Par exemple, on pourra utiliser des solutions comprenant un mélange élicitine/composé de formule générale (I) à une concentration de 0, 1 µM à 100 µM, et de préférence de 10 µM à 50 µM.

Comme dans le cas des composés de formule générale (I) utilisés seuls, les quantités ci-dessus sont données à titre indicatif et pourront varier selon l'âge, la nature ou la taille des plantes traitées, ainsi que selon la méthode d'application utilisée.

N'importe quelle protéine de la famille des élicitines peut être utilisée en association avec un composé de formule générale (I) pour la mise en oeuvre de la présente invention. A titre d'exemples non-limitatifs, on citera la capsicéine, la parasiticéine, la cryptogéine, la cinnamomine, ou l'oligandrine.

L'utilisation des composés de formule (I) seuls ou en association avec une élicitine peut s'effectuer par applications sur les parties aériennes des plantes par des méthodes classiques, notamment par arrosage, ou par pulvérisation ; on peut également effectuer des applications sur les racines des plantes, par incorporation au sol ou au substrat de culture, ou par arrosage de ceux-ci avec une solution comprenant ledit composé ou ladite composition.

Du fait que les composés de formule (I) seuls ou en association avec une élicitine permet d'induire une résistance systémique acquise, elle confère aux plantes traitées un spectre de protection très large vis-à-vis de nombreux agents pathogènes, et notamment de microorganismes pathogènes, tels que des champignons, des bactéries, des phytoplasmes, ou des virus.

En outre, les composés de formule (I) ou les compositions conformes à l'invention permettent d'induire une résistance systémique acquise, chez des plantes qui ne sont pas naturellement réactives aux seules élicitines, telles que la tomate, le poivron, la pomme de terre ou la vigne.

La présente invention sera mieux comprise à l'aide du complément de description qui va suivre, qui se réfère à des exemples non-limitatifs illustrant l'induction d'une résistance systémique acquise et l'obtention d'une protection vis-à-vis d'un pathogène par l'utilisation d'un ester d'acide gras et d'acide salicylique, et d'une composition conforme à l'invention, associant ledit ester avec une élicitine.

### EXEMPLE 1 : INDUCTION DE NECROSES PAR L'ACIDE CAPROYL SALICYLIQUE, UTILISE SEUL OU EN ASSOCIATION AVEC UNE ELICITINE.

L'activité élicitrice de l'acide caproyl salicylique, seul ou en association avec la cryptogéine, a été évaluée par observation de l'effet nécrosant, qui indique l'induction d'une réaction de type hypersensible,et la mise en place des mécanismes conduisant à l'établissement d'une RSA.

La cryptogéine est préparée selon le protocole décrit par BONNET et al. (Eur. J. Plant. Pathol., 102, 181-192, 1996), mise en solution dans de l'eau), et éventuellement conservée à -30°C jusqu'à utilisation. Elle est utilisée sous forme de solution mère aqueuse à 1 mg/ml.

L'acide caproyl salicylique a été préparé comme suit :
A une solution de pyridine refroidie à -15°C (7 ml, 0,08 mol) dans 50 ml de toluène ont été ajoutés : du chlorure de caproyle (12,5 ml, 0,07 mol) goutte à goutte par une ampoule à brome et 5 min plus tard une solution d'acide salicylique (10 g, 0,07 mol) dans 80 ml d'éther. Le mélange a été agité 1 h à -15°C et 2 h à 50°C, ensuite à température ambiante pendant la nuit. À la fin de la réaction, on a ajouté 2 L d'eau, le mélange a été laissé tourner pendant 2 h à température ambiante, le produit a été extrait par l'éther, la phase organique a été lavée à l'eau (3 fois), NaCl saturé, puis séchée sur Na₂SO₄, filtrée et évaporée à l'évaporateur rotatif, sous pression réduite à température ambiante. Le produit obtenu a été séché au dessiccateur en présence de pastilles de potasse. Le rendement est de 60 à 80%.

L'acide caproyl salicylique est conservé sous forme de dispersion à 1,4 mg/ml (10 mM), dans l'eau.

Pour l'obtention d'une composition acide caproyl salicylique/cryptogéine conforme à l'invention on ajoute, sous agitation, la dispersion d'acide caproyl salicylique à la solution de cryptogéine (0,5 à 1 ml de dispersion d'acide caproyl salicylique pour 1 ml de solution de cryptogéine).

### Chez le tabac :

Des plants de tabac sont cultivés en serre, sous éclairage naturel. Ils sont utilisés-lorsque les plantes sont âgées de 70 jours.

Des infiltrations de feuilles de tabac, à divers niveaux de la plante, ont été réalisées avec :
- la cryptogéine (10 µM) ;
- l'acide caproyl salicylique (10 µM) ;
- le mélange acide caproyl salicylique/cryptogéine (1 ou 10 µM) ;
   et, à titre de comparaison avec :
- l'acide salicylique (10 µM) ;
- l'éthylène glycol salicylate (10 µM).

Des contrôles sont effectués par infiltration avec de l'eau.

3 lots de 5 plantes sont utilisées pour chaque essai. On infiltre dans un pétiole sous apical 10 µl de la solution à tester à l'aide d'une seringue en plastique de 1 ml sans aiguille. Les observations sont effectuées 48 h après le traitement.

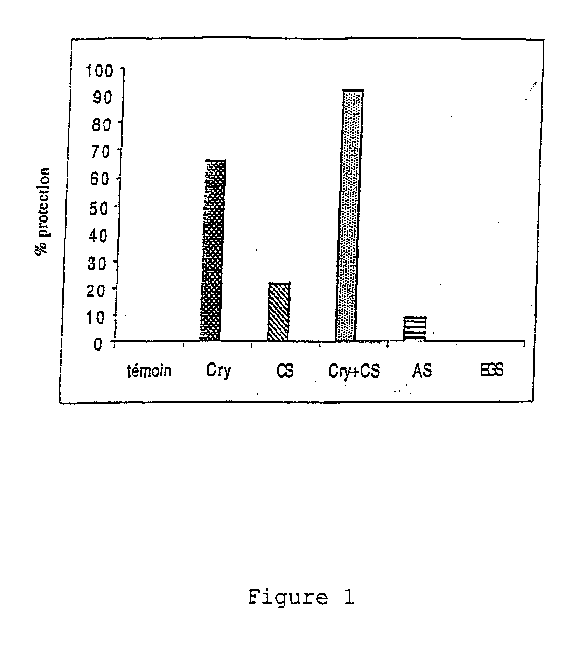

Les résultats sont présentés dans la Figure 1.

### Légende de la Figure 1 :

Les molécules infiltrées sont indiquées sur l'axe des abscisses : Témoin : eau ; CRY : cryptogéine ; CS : caproyl salicylique ; ; CRY+CS : mélange cryptogéine/caproyl salicylique ; AS : acide salicylique ; EGS : éthylène glycol salicylique. Tous les produits sont administrés à raison de 0,1 nmole/plant

L'axe des ordonnées indique l'intensité moyenne des nécroses, évaluée par le nombre et la taille de celles-ci.

On n'observe aucune nécrose dans le cas d'une infiltration avec l'acide salicylique, l'éthylène glycol salicylate ou l'eau. En revanche, l'infiltration avec la cryptogéine, utilisée seule, induit des nécroses. Des nécroses équivalentes sont obtenues avec l'acide caproyl salicylique utilisé à une concentration molaire 10 fois moins importante que dans le cas de la cryptogéine. L'infiltration avec le complexe cryptogéine/caproyl salicylique utilisé à la même concentration molaire que l'acide caproyl salicylique, augmente considérablement l'intensité des nécroses par rapport à la cryptogéine ou au caproyl salicylique ; en outre, on observe lors de l'utilisation de ce mélange, l'apparition de nombreuses nécroses foliaires à distance du point d'inoculation, qui indiquent une systémisation de la réponse.

Ces résultats mettent en évidence l'activité biologique de l'acide caproyl salicylique en ce qui concerne l'induction de nécroses, ainsi que la potentialisation de l'activité biologique de l'acide caproyl salicylique et de la cryptogéine résultant de leur association.

### Chez la tomate :

Les mêmes expérimentations que ci-dessus ont été effectuées chez la tomate, plante naturellement non-réactive à la cryptogéine.

Les différentes infiltrations et observations ont été réalisées selon les conditions indiquées ci-dessus pour le tabac.

Comme dans le cas du tabac, on n'observe aucune nécrose dans le cas d'une infiltration avec l'acide salicylique (AS), l'éthylène glycol salicylate (EGS), la cryptogéine (CRY) ou l'eau (témoin). Comme attendu, on n'observe aucune nécrose avec la cryptogéine. En revanche, l'infiltration avec l'acide caproyl salicylique (CS) seul ou en association avec la cryptogéine (CRY+CS) conduit aux mêmes résultats que dans le cas des plants de tabac de l'Exemple 1.

### EXEMPLE 2 : PROTECTION VIS-A-VIS DE L'OOMYCETE PATHOGENE PHYTOPHTHORA PARASITICA NICOTIANAE PAR L'ACIDE CAPROYL SALICYLIQUE, UTILISE SEUL OU EN ASSOCIATION AVEC UNE ELICITINE.

Des plants de tabac ont été utilisés pour déterminer la protection induite vis à vis de *Phytophthora parasitica nicotiniae* par les différents produits testés à l'Exemple 1 ci-dessus.

Ce champignon induit chez le tabac une maladie dénommée" maladie du pied noir ", caractérisée par des nécroses de la tige, visibles à l'extérieur, mais encore plus envahissantes à l'intérieur, et qui aboutit très rapidement à la mort de la plante.

3 lots de 5 plantes sont utilisés pour chaque essai. Les plants de tabac sont cultivés et infiltrés comme décrit dans l'Exemple 1 ci-dessus, en utilisant les mêmes molécules, aux mêmes concentrations sauf pour le mélange acide caproyl salicylique/cryptogéine qui est utilisé à 1 µM.

48 h après cette infiltration, le pétiole d'une feuille située deux étages foliaires plus bas est coupé et un disque de gélose comportant du mycélium de *Phytophthora parasitica nicotianae* est appliqué.

Les observations sont effectuées 7 jours après l'infection.

La progression de la maladie est évaluée par la mesure de la taille de la nécrose extérieure et intérieure de la tige.

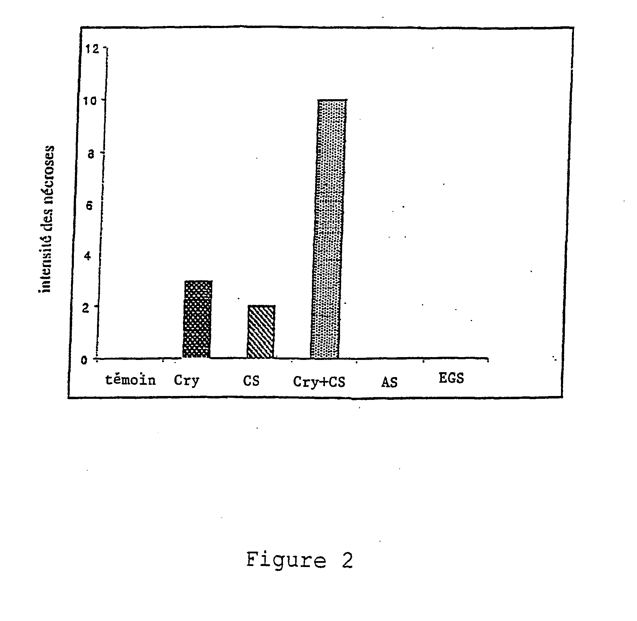

Les résultats sont représentés dans la Figure 2.

### Légende de la Figure 2 :

Les molécules infiltrées sont indiquées sur l'axe des abscisses : Témoin : eau ; CRY : cryptogéine (0,1 nmole/plant); Ces : caproyl salicylique (0,1 nmole/plant); CRY+CS : mélange cryptogéine/caproyl salicylique (0,01 nmole/plant) ; AS : acide salicylique (0,1 nmole/plant) ; Egos : éthylène glycol salicylate (0,1 nmole/plant).

L'axe des ordonnées indique le pourcentage de protection, évalué par rapport au témoin (longueur moyenne de tige nécrosée chez les plantes traitées /longueur moyenne de tige nécrosée chez les plantes témoin traitées avec de l'eau x 100).

L'éthylène glycol salicylate (0,1 nmole/plante) non seulement ne donne aucune protection mais rend les plants de tabac plus sensibles à l'infection (la taille des nécroses est plus importante et donc la mort de la plante plus rapide). L'utilisation de l'acide salicylique (0,1 nmole/plante) donne une faible protection (< 10%) alors que l'utilisation de l'acide caproyl salicylique, à dose 10 fois plus faible (0,01 nmole/plante) permet d'obtenir un indice de protection deux fois plus important (∼25%). La cryptogéine (CRY) à 0,1 nmole/plante donne un bon indice de protection (de l'ordre de 65%). Le mélange cryptogéine- acide caproyl salicylique (CRY+CS) à dose 10 fois plus faible (0,01 nmole/plante) donne toutefois un indice de protection encore plus élevé (plus de 90%).

Ces résultats montrent que l'acide caproyl salicylique confère une protection beaucoup plus efficace que l'acide salicylique, et qu'en outre l'utilisation d'un mélange cryptogéine-acide caproyl salicylique potentialise l'effet protecteur de chacun de ses constituants.

## Revendications

1. Utilisation d'un composé de formule générale (I) : 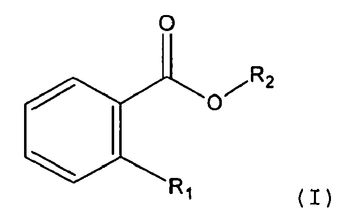 dans laquelle :
R₁ est un groupe 2-oxy ester de formule -O-CO-R₃ dans laquelle R₃ est une chaîne aliphatique ou alicyclique en C₃ à C₉, et R₂ est un atome d'hydrogène,
pour la protection de végétaux contre des pathogènes.

2. Utilisation selon la revendication 1, **caractérisée en ce que** ledit composé est choisi parmi l'acide octanoate-2-salicylique, l'acide hexanoate-2-salicylique, l'acide butyrate-2-salicylique, ainsi que leurs sels.

3. Utilisation selon la revendication 2, **caractérisée en ce que** ledit composé est l'acide hexanoate-2-salicylique.

4. Utilisation selon l'une quelconque des revendications 1 à 3, **caractérisée en ce que** ledit composé est utilisé à raison de 0,02 à 10 nmoles par plante traitée.

5. Utilisation d'un composé de formule générale (I) : 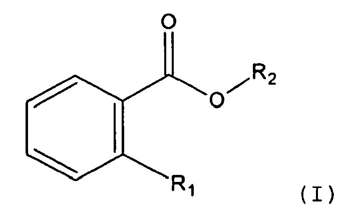 dans laquelle :
a) R₁ est un groupe hydroxyle et R₂ est une chaîne aliphatique ou alicyclique en C₂ à C₂₂ ; ou bien
b) R₁ est un groupe 2-oxy ester de formule -O-CO-R₃ dans laquelle R₃ est une chaîne aliphatique ou alicyclique en C₁ à C₂₁, et R₂ est un atome d'hydrogène ; ou bien
c) R₁ est un groupe 2-oxy ester de formule -O-CO-R₃ où R₃ est défini comme ci-dessus, et R₂ est une chaîne aliphatique ou alicyclique en C₂ à C₂₂,
associé avec une élicitine,
pour la protection de végétaux contre des pathogènes.

6. Composition comprenant un composé de formule générale (I) tel que défini dans la revendication 5 et une élicitine.

7. Composition selon la revendication 6, **caractérisée en ce que** ladite élicitine est la cryptogéine.

8. Utilisation d'une composition selon une quelconque des revendications 6 ou 7, pour la protection de végétaux contre des pathogènes.

9. Utilisation selon la revendication 8, **caractérisée en ce que** ladite composition est utilisée à raison de 0,005 à 1 nmole par plante traitée.

## Claims

1. Use of a compound of general formula (I): 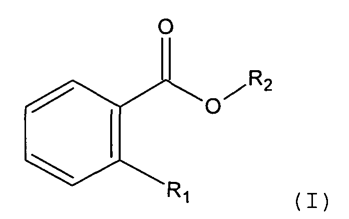 wherein:
R₁ represents a 2-oxy ester group having formula -O-CO-R₃ where R₃ is an aliphatic or alicyclic chain from C₃ to C₉, and
R₂ is an hydrogen atom,
for the protection of plants against pathogens.

2. Use, according to claim 1, **characterized in that** said compound is selected from
acid octanoate-2-salicylic, acid hexanoate-2-salicylic, acid butyrate-2-salicylic, or salts thereof.

3. Use according to claim 2, **characterized in that** said compound is hexanoate-2-salicylic acid.

4. Use according to any of claims 1 to 3, **characterized in that** said compound is used at the dose from 0,02 to 10 nmoles per treated plant.

5. Use of a compound of general formula (I) : 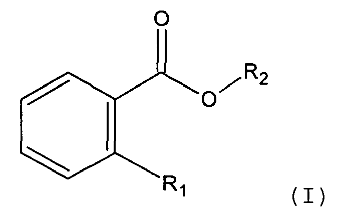 wherein:
a) R₁ represents an hydroxyl group and R₂ is either an aliphatic or alicyclic chain from C₂ to C₂₂ ; or
b) R₁ is a 2-oxy ester group with formula -O-CO-R₃ wherein R₃ is an aliphatic or alicyclic chain from C₁ to C₂₁, and R₂ is an hydrogen atom; or
c) R₁ represents a 2-oxy ester group with formula -O-CO-R₃ where R₃ is defined as above, and R₂ is an aliphatic or alicyclic chain from C₂ to C₂₂,
associated with an elicitin,
for the protection of plants against pathogens.

6. Composition including a compound of general formula (I) as defined in claim 5 and an elicitin.

7. Composition according to claim 6, **characterized in that** said elicitin is cryptogein.

8. Use of a composition according to any of claim 6 or 7, for the protection of plants against pathogens.

9. Use according to claim 8, **characterized in that** said composition is used from 0,005 to 1 nmole per treated plant.

## Patentansprüche

1. Verwendung einer Verbindung mit der allgemeinen Formel (I): 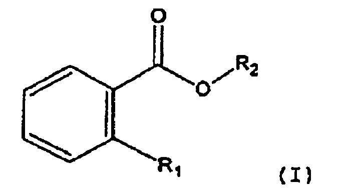 in der:
R₁ eine 2-Oxyester-Gruppe ist mit der Formel -O-CO-R₃, in der R₃ eine aliphatische oder alicyclische Kette mit C₃ bis C₉ ist, und R₂ ein Wasserstoffatom ist, zum Schutz von Pflanzen gegen Krankheitserreger.

2. Verwendung nach Anspruch 1,
**dadurch gekennzeichnet, dass** die Verbindung gewählt ist aus Octanoat-2-Salicylsäure, Hexanoat-2-Salicylsäure, Butyrat-2-Salicylsäure sowie deren Salze.

3. Verwendung nach Anspruch 2,
**dadurch gekennzeichnet, dass** die Verbindung die Hexanoat-2-Salicylsäure ist.

4. Verwendung nach einem der Ansprüche 1 bis 3,
**dadurch gekennzeichnet, dass** die Verbindung in einer Menge von 0,02 bis 10 nmol pro behandelter Pflanze verwendet wird.

5. Verwendung einer Verbindung mit der allgemeinen Formel (I): 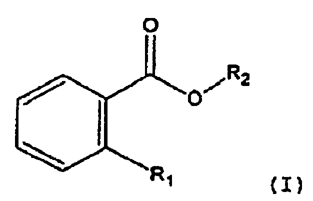 in der:
a) R₁ eine Hydroxylgruppe ist und R₂ eine aliphatische oder alicyclische Kette mit C₂ bis C₂₂ ist; oder
b) R₁ eine 2-Oxyester Gruppe ist mit der Formel -O-CO-R₃, in der R₃ eine aliphatische oder alicyclische Kette mit C₁ bis C₂₁ ist, und R₂ ein Wasserstoffatom ist; oder
c) R₁ eine 2-Oxyester Gruppe ist mit der Formel -O-CO-R₃, in der R₃ wie oben definiert ist, und R₂ eine aliphatische oder alicyclische Kette mit C₂ bis C₂₂ ist;
in Verbindung mit einem Elicitin,
zum Schutz von Pflanzen gegen Krankheitserregern.

6. Zusammensetzung mit einer Verbindung mit der allgemeinen Formel (I) wie in Anspruch 5 definiert und einem Elicitin.

7. Zusammensetzung nach Anspruch 6,
**dadurch gekennzeichnet, dass** das Elicitin ein Cryptogein ist.

8. Verwendung einer Zusammensetzung nach einem der Ansprüche 6 oder 7,
für den Schutz von Pflanzen gegen Krankheitserregern.

9. Verwendung nach einem Anspruch 8,
**dadurch gekennzeichnet, dass** die Zusammensetzung in einer Menge von 0,005 bis 1 nmol pro behandelter Pflanze verwendet wird.
